# EUROPEAN PATENT APPLICATION

(11) **EP 4 455 868 A1**
(43) Date of publication of application: **30.10.2024**
(21) Application number: 21969285.2
(22) Date of filing: 27.12.2021
(51) Int. Cl.: G06F 9/30

(54) **PROCESSING METHOD AND DEVICE BASED ON VECTOR CALCULATION**

(71) Applicant: Huawei Technologies Co., Ltd., Shenzhen, Guangdong 518129 (CN)
(72) Inventor: OU, Yan, Shenzhen, Guangdong 518129 (CN); ZHOU, Yongbin, Shenzhen, Guangdong 518129 (CN); WANG, Xiaoyu, Shenzhen, Guangdong 518129 (CN)
(74) Representative: Epping - Hermann - Fischer
(86) International application number: PCT/CN2021/141745
(87) International publication number: WO 2023/122899

(57) **Abstract**

This application discloses a vector computing-based processing method and an apparatus, to improve utilization of a vector component and reduce a waste of resources. The method includes: A vector component receives vector task VT processing requests respectively initiated by a plurality of requesters RQs, where the VT processing request includes a quantity of requested destination resources for processing a to-be-processed VT; selects, from the plurality of VT processing requests, one or more VT processing requests of which a sum of requested quantities is less than or equal to a quantity of idle destination resources in the vector component; obtains one or more to-be-processed VTs corresponding to the one or more VT processing requests, to obtain a VT set; and processes the VT set based on the idle destination resources.

## Description

### TECHNICAL FIELD

This application relates to the field of communication technologies, and in particular, to a vector computing-based processing method and an apparatus.

### BACKGROUND

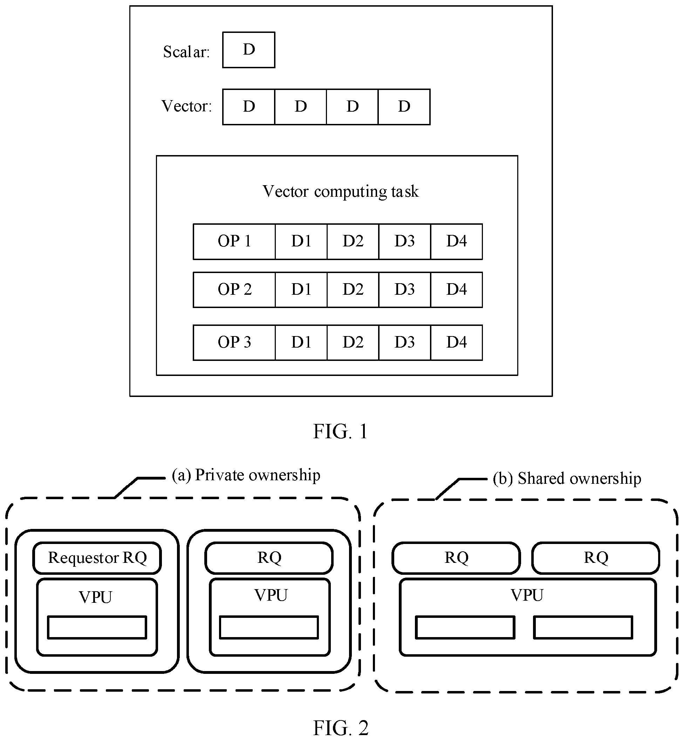

With the advent of a big data era, a processor needs to process more data, and the processor is required to process the data at low costs and with high efficiency. Vector (vector) computing is one of current popular processing technologies. Refer to FIG. 1. Several pieces of to-be-processed scalar data are combined to obtain a vector unit, and each scalar forms a lane (lane) in the vector unit. In addition, a set of several vector computing instructions may constitute a vector task (vector task, VT). By integrating scalar data into a vector, performance overheads and energy consumption in a computing process can be reduced, thereby improving an energy consumption ratio of data computing.

However, because all vectors are generally processed by a vector processing unit (vector processing unit, VPU), a maximum quantity of computable vector lanes is determined based on a structure of the VPU. If a quantity of to-be-computed vector lanes in the VT is less than the maximum quantity of computable vector lanes in the VPU, a large quantity of idle resources remain in the VPU, and resources cannot be fully used, causing deterioration in utilization of the vector component and a waste of resources.

### SUMMARY

This application provides a vector computing-based processing method and an apparatus, to improve utilization of a vector component and reduce a waste of resources.

According to a first aspect, an embodiment of this application provides a vector computing-based processing method, including: A vector component receives vector task VT processing requests respectively initiated by a plurality of requesters (requestors, RQs), where the VT processing request includes a quantity of requested destination resource for processing a to-be-processed VT; selects, from the plurality of VT processing requests, one or more VT processing requests of which a sum of requested quantities is less than or equal to a quantity of idle destination resources in the vector component; then obtains one or more to-be-processed VTs corresponding to the one or more VT processing requests, to obtain a VT set; and processes the VT set based on the idle destination resources.

A VT is a set including a plurality of vector instruction operations. For example, the VT may be a vector instruction operation set including at least one instruction of vector instruction operations such as fixed-point multiplication and addition, floating-point multiplication and addition, fixed-point arithmetic logic, and floating-point arithmetic logic. The vector component may be a processing unit that performs vector computing on the VT. The vector component includes but is not limited to a vector computing unit (for example, vector computing such as addition, subtraction, multiplication, division, logical computation, or shift of vectors) and a vector memory access unit (for example, vector computing such as reading or writing of vector data in a memory). For example, the vector component may include: a vector task pool configured to buffer a VT sent by each RQ and interact with each RQ, a scheduling module configured to select a VT based on obtained usage status information in the vector computing unit and the VT buffered in the vector task pool to obtain the VT set, a resource table configured to collect statistics on resource usage status information of the vector component, a share vector computing component (share vector processing unit, SVU) configured to execute the VT set, and a data integration module that is responsible for integrating processing results of the SVU. The RQ is any initiator of the VT, and includes but is not limited to a central processing unit (central processing unit, CPU), a thread in a CPU, a graphics processing unit (graphics processing unit, GPU), a thread in a GPU, and a digital signal processing (digital signal processing, DSP) chip.

In the method, before the VT is processed, the vector component selects, based on the quantity of idle destination resources and the quantity of destination resources requested by the plurality of RQs, the one or more VT processing requests that are capable of being processed based on a remaining idle destination resource. Then, the vector component may use the VT set of the to-be-processed VT corresponding to the selected one or more VT processing requests as input data to perform vector computing, to avoid an idle destination resource in the vector component as much as possible, and process as many VTs as possible. A processing object of the vector component is the VT set, and the VT set includes a plurality of to-be-processed VTs. Therefore, it is equivalent to a case in which the vector component implements parallel execution on the plurality of to-be-processed VTs. In this way, a problem in a conventional technology that resource utilization is low because the VPU can process only one to-be-processed VT initiated by one RQ at a time can be resolved, thereby improving resource utilization of the vector component and reducing a waste of resources.

In a possible design, to increase a probability that the RQ successfully applies for the VT processing request, the RQ may request in advance to query for a usage status of the destination resource in the vector component. During implementation of this application, before the receiving VT processing requests respectively initiated by a plurality of RQs, the vector component may receive a query request initiated by a first RQ. The query request is used to obtain usage status information of the destination resource. The usage status information indicates the quantity of idle destination resources or a quantity of used destination resources. The vector component feeds back the usage status information to the first RQ. The first RQ may be any RQ.

In this design, the RQ can dynamically initiate the VT processing request based on a query result by querying for the usage status information of the destination resource in the vector component. For example, if there is an idle destination resource in the vector component, the RQ may apply to the vector component for a part or all of the idle destination resources. For another example, if there are idle destination resources in the vector component, but a quantity of the idle destination resources is small, or there is no idle destination resource, the RQ may choose to wait for specific duration and then initiate the query request to the vector component again. In this way, through interaction between the RQ and the vector component, a success probability of applying for the destination resource by the RQ can be increased, and utilization of the vector component can be improved.

In a possible design, the processing the VT set based on the idle destination resources may be implemented as follows: processing the VT set based on an execution cycle, where different to-be-processed VTs included in the VT set correspond to a same quantity or different quantities of execution cycles, and the quantity of execution cycles is determined by the to-be-processed VT; in each execution cycle, if the quantity of idle destination resources is greater than or equal to a requested quantity corresponding to a first to-be-processed VT, splitting a remaining unprocessed VT in the first to-be-processed VT, where the first to-be-processed VT represents any to-be-processed VT that is in the VT set and on which processing is not completed; and processing the split first to-be-processed VT by using the requested destination resources applied for by the first to-be-processed VT and the idle destination resource in the vector component.

In this design, the vector component can implement flexible processing on a VT being processed. By splitting an unprocessed VT, because content of the unprocessed VT is fixed, in a processing manner of processing a split unprocessed VT by using more destination resources, execution duration of the VT on which processing is not completed can be shortened. In addition, the resource utilization of the vector component can be improved.

In a possible design, the VT processing request further includes RQ identification information. After the processing the VT set, the method further includes: generating a processing result; and dividing the processing result based on the RQ identification information and different RQs, to obtain one or more processing sub-results.

In this design, the vector component may process the obtained VT set, and may further split processing results corresponding to to-be-processed VTs from the different RQs, so that processing sub-results respectively corresponding to the different RQs can be distinguished between, and a corresponding RQ can be further accurately fed back.

In a possible design, the method further includes: if an application of a VT processing request of the first RQ fails, feeding back, to the first RQ, response information that indicates an application failure.

In this design, the vector component may perform feeding back on the VT processing request initiated by the RQ in time, so that the RQ changes the VT processing request in time or uses another processing manner for the VT, thereby ensuring that the RQ processes the to-be-processed VT in time.

Based on the foregoing design, the method further includes: receiving a VT processing request re-initiated by the first RQ, where a quantity of requested destination resources that is included in the re-initiated VT processing request is less than the quantity of requested destination resources that is included in the VT processing request initiated last time.

In this design, the RQ may determine, based on the response information that indicates the application failure of the VT processing request, that a quantity of destination resources that are requested by the RQ and that cannot be provided by the vector component, and may flexibly change the VT processing request, and attempt to request a smaller quantity of destination resources from the vector component, thereby improving a success rate of applying for the destination resource, and fully utilizing the idle destination resource in the vector component, to improve the resource utilization of the vector component.

In a possible design, the VT processing request further includes the following information: a priority of a VT; and the method further includes: if an application of a first VT processing request of the first RQ succeeds, receiving a second VT processing request initiated by the first RQ, where a priority of a VT in the second VT processing request is higher than a priority of a VT in the first VT processing request; and processing, by using requested destination resources correspondingly applied for by the first VT processing request, a to-be-processed VT corresponding to the second VT processing request.

In this design, the RQ may preempt, based on a task priority, a destination resource that has been successfully applied for, to ensure that a VT with a higher priority can be processed in time. Based on the foregoing design, the method further includes: receiving a migration indication initiated by the first RQ; and migrating, to a storage unit based on the migration indication, a remaining unprocessed VT in a to-be-processed VT corresponding to the first RQ.

In this design, when processing of the VT being processed needs to be suspended, the vector component may store a processing progress in time based on the migration indication of the RQ, to avoid a VT processing exception.

In a possible design, the method further includes: receiving a resource release indication initiated by the first RQ; and releasing, based on the resource release indication, the requested destination resources successfully applied for by the first RQ.

In this design, based on the interaction between the RQ and the vector component, a resource that has been applied for by the RQ can be released in time, thereby avoiding the waste of resources.

According to a second aspect, an embodiment of this application further provides a vector computing-based processing method, including: an RQ initiates a first VT processing request to a vector component, where the first VT processing request includes a quantity of requested destination resources for processing a to-be-processed VT; and if it is determined that an application of the first VT processing request succeeds, sending the to-be-processed VT or address obtaining information of the to-be-processed VT to the vector component, so that the vector component obtains the to-be-processed VT and performs processing based on the destination resource that is successfully applied for.

In a possible design, before initiating the first VT processing request to the vector component, the method further includes: initiating a query request to the vector component, where the query request is used to obtain usage status information of the destination resource, and the usage status information indicates a quantity of idle destination resources or a quantity of used destination resources; receiving the usage status information fed back by the vector component; and determining, based on the usage status information, the quantity of idle destination resources in the vector component, and determining a requested quantity less than or equal to the quantity of idle destination resources; or if it is determined that the quantity of idle destination resources is less than a preset threshold, initiating the query request again after preset duration elapses, or processing, by the RQ, the to-be-processed VT.

In a possible design, the method further includes: compiling the to-be-processed VT into a plurality of different VT versions, where the different VT versions correspond to different quantities of requested destination resources.

In this design, the RQ prepares the plurality of VT versions of the to-be-processed VT in advance, so that when an application of the destination resource succeeds, the destination resource can be more quickly provided to the vector component for processing, thereby improving vector computing efficiency.

In a possible design, the initiating the first VT processing request to the vector component includes: initiating the first VT processing request by sequentially using, starting from a VT version corresponding to a maximum requested quantity, at least one VT version whose requested quantity is less than or equal to the quantity of idle destination resources as a destination VT version based on the quantity of idle destination resources and from the at least one VT version, until it is determined that the application of the first VT processing request succeeds.

In this design, the RQ initiates VT processing requests from a larger requested quantity to a smaller requested quantity, so that more destination resources can be applied for as much as possible on the basis that the application of the destination resource succeeds, and the to-be-processed VT is processed by using the more destination resources, thereby improving processing efficiency of the to-be-processed VT.

In a possible design, the initiating the first VT processing request to the vector component includes: receiving response information that is fed back by the vector component and that indicates an application failure; and re-initiating a first VT processing request based on the response information, where a requested quantity included in the re-initiated first VT processing request is less than the requested quantity included in the first VT processing request initiated last time.

In a possible design, the first VT processing request further includes the following information: a priority of a VT; and the method further includes: if it is determined that the application of the first VT processing request succeeds, initiating a second VT processing request to the vector component, where a priority of a VT in the second VT processing request is higher than a priority of a VT in the first VT processing request.

In a possible design, the method further includes: initiating a migration indication to the vector component, where the migration indication is for the vector component to migrate, to a storage unit, a remaining unprocessed VT in the to-be-processed VT corresponding to the RQ.

In a possible design, the method further includes: initiating a resource release indication to the vector component, where the resource release indication is for the vector component to release the requested destination resources successfully applied for by the RQ.

According to a third aspect, an embodiment of this application provides a vector computing-based processing apparatus. The apparatus includes a transceiver unit and a processing unit. Functions performed by the transceiver unit and the processing unit may correspond to steps performed by the vector component in any possible design or implementation of the first aspect.

According to a fourth aspect, an embodiment of this application further provides a vector computing-based processing apparatus. The apparatus includes a transceiver unit and a processing unit. Functions performed by the transceiver unit and the processing unit may correspond to steps performed by the RQ in any possible design or implementation of the second aspect.

According to a fifth aspect, an embodiment of this application provides a computer program product. The computer program product includes computer program code. When the computer program code is run, the method performed by the vector component in the first aspect is performed, or the method performed by the RQ in the second aspect is performed.

According to a sixth aspect, an embodiment of this application provides a chip system. The chip system includes a processor, configured to implement a function of the vector component in the method according to the first aspect, or configured to implement a function of the RQ in the method according to the second aspect. In a possible design, the chip system further includes a memory, configured to store program instructions and/or data. The chip system may include a chip, or may include a chip and another discrete component.

According to a seventh aspect, an embodiment of this application provides a computer-readable storage medium. The computer-readable storage medium stores a computer program. When the computer program is run, the method performed by the vector component in the first aspect is implemented, or the method performed by the RQ in the second aspect is implemented.

For beneficial effects of any one of the second aspect to the seventh aspect, refer to beneficial effects of the possible designs in the first aspect. Details are not described herein again.

### BRIEF DESCRIPTION OF DRAWINGS

FIG. 1 is a schematic of a scalar, a vector, and a vector task;
FIG. 2 is a schematic of private ownership and shared ownership;
FIG. 3a is a first schematic of a scenario of private ownership and shared ownership;
FIG. 3b is a second schematic of a scenario of private ownership and shared ownership;
FIG. 4 is a schematic of a structure of a vector computing-based processing system according to an embodiment of this application;
FIG. 5 is a first schematic of usage status information of a vector component according to an embodiment of this application;
FIG. 6 is a second schematic of usage status information of a vector component according to an embodiment of this application;
FIG. 7 is a third schematic of usage status information of a vector component according to an embodiment of this application;
FIG. 8 is a schematic of a structure of a vector computing-based processing system according to an embodiment of this application;
FIG. 9a is a first schematic flowchart of a vector computing-based processing method according to an embodiment of this application;
FIG. 9b is a second schematic flowchart of a vector computing-based processing method according to an embodiment of this application;
FIG. 10 is a schematic of a scenario of a vector computing-based processing method according to an embodiment of this application;
FIG. 11 is a schematic flowchart of initiating a VT processing request according to an embodiment of this application;
FIG. 12 is a schematic flowchart of splitting a to-be-processed VT according to an embodiment of this application;
FIG. 13a to FIG. 13d each are a schematic of a scenario of splitting a to-be-processed VT according to an embodiment of this application;
FIG. 14 is a schematic of another structure of a vector computing-based processing apparatus according to an embodiment of this application; and
FIG. 15 is a schematic of a structure of a chip according to an embodiment of this application.

### DESCRIPTION OF EMBODIMENTS

The technical solutions provided in embodiments of this application may be applied to various devices including vector computing, for example, a network device or a terminal device that can perform vector computing. In addition, the device may be a computing device configured to implement various different technical fields.

The network device may be, for example, a server, a relay station, a vehicle-mounted device, a future evolved public land mobile network (public land mobile network, PLMN) device, a device in a device-to-device (device-to-device, D2D) network, a device in a machine-to-machine (machine-to-machine, M2M) network, a device in internet of things (internet of things, IoT), or a network device in another network.

The terminal device is a device that has a wireless transceiver function, and may send a signal to the network device, or receive a signal from the network device. The terminal device is configured to connect a person, an object, a machine, and the like, and may be widely used in various scenarios. For example, the terminal device includes but is not limited to terminal devices in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (telemedicine), a smart grid (smart grid), smart furniture, smart office, a smart wearable, smart transportation, a smart city (smart city), an uncrewed aerial vehicle, a robot, and the like. The terminal device may be sometimes referred to as user equipment (user equipment, UE), a terminal, an access station, a station (station, STA), a UE station, a remote station, a wireless communication device, a user apparatus, or the like. For example, the terminal device may be a mobile phone (mobile phone), a pad (Pad), a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), a smart speaker in an IoT network, a wireless terminal device in telemedicine, a wireless terminal device in a smart grid, a wireless terminal device in transportation security, a wireless terminal device in a smart city, or a wireless terminal device in a smart home, or the like. Alternatively, the terminal device may be fixed or mobile. This is not limited in embodiments of this application. In addition, the terminal device may alternatively be a wearable device. The wearable device may also be referred to as a wearable intelligent device, an intelligent wearable device, or the like, and is a general term of wearable devices, for example, glasses, gloves, watches, clothes, and shoes, that are intelligently designed and developed for daily wear by using a wearable technology. If the various terminal devices described above are located in a vehicle (for example, placed in the vehicle or installed in the vehicle), the terminal device may be considered as a vehicle-mounted terminal device. For example, the vehicle-mounted terminal device is also referred to as an on-board unit (on-board unit, OBU).

In addition, in embodiments of this application, the terminal device may be an apparatus configured to implement a function of a terminal, or may be an apparatus, for example, a chip system, that can support the terminal device in implementing the function. The apparatus may be installed in the terminal device. For example, the terminal device may alternatively be a vehicle detector or a sensor in a gas station.

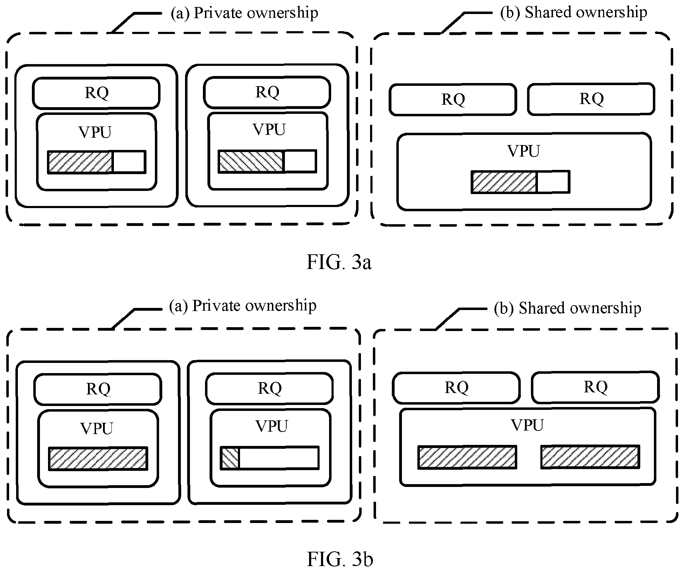

With reference to content described in the background, in the field of vector computing technologies, there may be a problem that a VPU has a large quantity of remaining idle resources and resources cannot be fully used. The problem may also be referred to as a short vector problem. For ease of understanding, the following further describes the short vector problem with reference to FIG. 2 to FIG. 3b. Currently, VPU integration methods can be classified into private ownership and shared ownership. FIG. 2 is a schematic of private ownership and shared ownership. In the private ownership integration method, each requestor (requestor, RQ) that initiates a VT corresponds to a VPU, and another RQ cannot access the VPU. For example, in (a) of FIG. 2, a left RQ cannot access a VPU corresponding to a right RQ. In the shared ownership integration method, a plurality of RQs may share a VPU, in other words, each VPU may be accessed by the plurality of RQs. For example, in (b) of FIG. 2, both a left RQ and a right RQ can access a VPU. However, because vector computing is atomic, that is, each time the RQ initiates a VT, resources of an entire VPU need to be occupied. In this case, neither the private ownership nor the shared ownership in the current provided integration method can fairly resolve the short vector problem. As shown in FIG. 3a, in a scenario with a low degree of vectorization, the VPU cannot integrate enough scalars to fill a vector, resulting in the short vector problem. To be specific, when the VPU processes the VT, because resources required by a to-be-processed VT are fewer than resources that can be provided by the VPU, and another VT cannot be processed at the same time, high utilization of the VPU cannot be achieved. Alternatively, refer to FIG. 3b. There are a plurality of RQs, the 1^{st} RQ has a high degree of vectorization, and the 2^{nd} RQ has a low degree of vectorization. In this scenario, if the private ownership integration method is used, a short vector problem of the 2^{nd} RQ exists. If the shared ownership integration method is used, for the sake of efficiency priority, the VPU may first process the 1^{st} RQ, and at this time, the 1^{st} RQ preempts all VPU resources. Consequently, a VT in the 2^{nd} RQ cannot be responded in time, affecting a scheduling balance. For the sake of the scheduling balance, because the VPU can respond to only one VT at a time, when the VPU responds to the 2^{nd} RQ, the VPU resources may not be fully used, in other words, the short vector problem occurs. Therefore, various integration methods currently used for the VPU do not have good universality, and cannot fairly resolve the short vector problem in the vector computing, causing a waste of resources.

In view of this, embodiments of this application provide a vector computing-based processing method and an apparatus. In the method provided in embodiments of this application, a resource can be flexibly shared, and a proportion of idle resources in a vector component can be reduced, so that resource utilization of the vector component can be improved, to better resolve the short vector problem and avoid the waste of resources.

It should be noted that the resource in embodiments of this application represents a resource required for execution of the vector component, and may include but is not limited to a computing resource, a storage resource, a bandwidth resource, or the like. The following embodiment uses an example in which an RQ requests a destination resource. It should be understood that the destination resource may be determined based on a VT processing request of the RQ. For example, if a to-be-processed VT requested by the RQ for processing is a vector task that requires vector computing performed by a vector component, the destination resource may be a computing resource. For another example, if the to-be-processed VT requested by the RQ for processing is vector data that requires storage performed by the vector component, the destination resource may be a storage resource.

The RQ may be another processing unit or processing thread that is located in a same electronic device as the vector component. For example, the RQ may be a central processing unit (central processing unit, CPU), a processing thread in a CPU, a graphics processing unit (graphics processing unit, GPU), or a processing thread in a GPU. Alternatively, the RQ may be another processing unit or processing thread that is located in a different electronic device from the vector component, for example, a digital signal processing (digital signal processing, DSP) chip. This is not limited in this application.

First, a design idea of the method provided in embodiments of this application is briefly described.

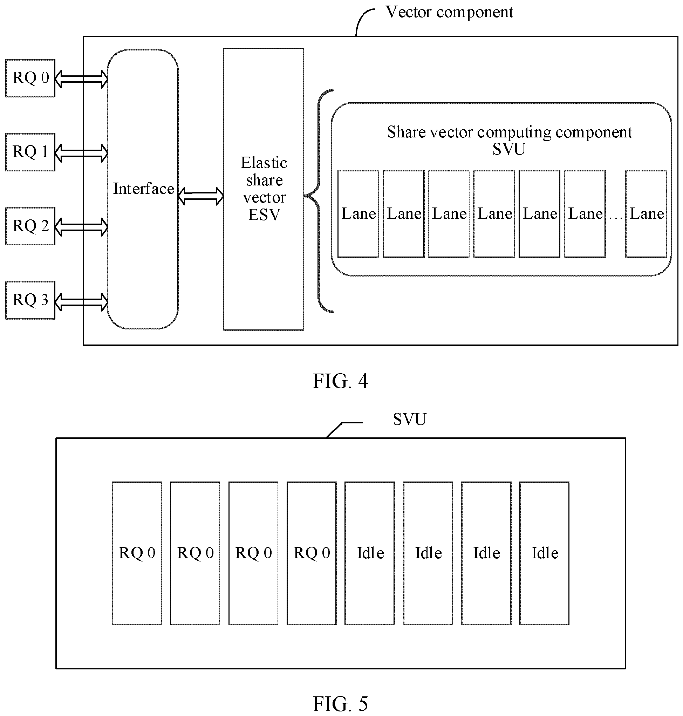

FIG. 4 is a schematic of a structure of a vector computing-based processing system according to an embodiment of this application. The system may include a plurality of RQs, for example, an RQ 0, an RQ 1, an RQ 2, and an RQ 3 shown in FIG. 4, which are configured to initiate VTs. A vector component may be a processing unit configured to perform vector computing on the VT, and includes but is not limited to a vector computing unit (which may perform, for example, vector computing such as addition, subtraction, multiplication, division, logical computation, or shift of vectors) and a vector memory access unit (which may perform, for example, vector computing such as reading or writing of the vector).

The vector component may specifically include: an interface, configured to implement access of all of the plurality of RQs to an elastic share vector (elastic share vector, ESV); an ESV, configured to implement convergence of a plurality of VTs respectively requested by the plurality of RQs, to implement elastic sharing of a resource of the vector component; and a share vector computing component (share vector processing unit, SVU), configured to execute a converged VT, and represent a computing resource for vector computing. The SVU may be included in the ESV, or the SVU and the ESV may be two units that are independent of each other.

It may be understood that the described system embodiment is merely an example. For example, the unit division is merely logical function division, and there may be another division manner in actual implementation. For example, the vector component may be further divided into a transceiver unit and a processing unit. The transceiver unit is configured to exchange information with the RQ, and the processing unit is configured to perform vector processing and the like. For another example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or other forms.

In embodiments of this application, from a perspective of the RQ, a vector component shared by the plurality of RQs may be constructed, so that each RQ can apply to the vector component for a destination resource on demand based on a quantity of valid lanes in the vector component, to implement elastic sharing of the vector component.

With reference to the content shown in FIG. 4, before initiating the VT, the RQ may request usage status information of the SVU from the ESV The usage status information may indicate a quantity of idle destination resources, or may further indicate a quantity of used destination resources. In this way, the RQ may apply for the destination resource in the SVU on demand based on the usage status information of the SVU, to execute the to-be-processed VT. For example, the RQ may apply for some or all idle destination resources in the SVU on demand.

For example, FIG. 5 is a schematic of usage status information of a vector component according to an embodiment of this application. It is assumed that a maximum quantity of computable lanes in an SVU is 8, and current usage status information of a destination resource indicates that four lanes have been used to execute a VT requested by an RQ 0, in other words, a quantity of idle lanes that are in the SVU and that can be obtained by an RQ 1 is 4. Based on this, an RQ may compile a to-be-processed VT into a target VT version that can be executed by using four lanes of destination resources. Alternatively, an RQ may compile a to-be-processed VT into a plurality of VT versions in advance, where the plurality of VT versions include a target VT version that can be executed by using four lanes of destination resources. Then, the RQ 1 may send a VT processing request to an ESV, to apply for the four lanes in the SVU to execute a VT corresponding to the target VT version. In this way, the vector component can simultaneously execute a VT initiated by the RQ 0 and a VT initiated by the RQ 1, and can fully use idle vector destination resources in the vector component, to improve resource utilization of the vector component and avoid a short vector problem.

In addition, in embodiments of this application, from a perspective of the ESV, the ESV may receive different VT processing requests from the plurality of RQs, or may receive different VT processing requests from a same RQ. In a conventional technology, the VPU can process only one VT at a time. During implementation of this application, the ESV may determine usage status information of a resource in the SVU. In addition, the ESV may receive a plurality of different VT processing requests through an interface, and receive a query request for the usage status information of the destination resource in the SVU from the RQ. The ESV may then select, from the plurality of the VT processing requests, one or more VT processing requests of which a sum of requested quantities is less than or equal to a quantity of idle destination resources in the vector component. Optionally, if the ESV determines that the sum of requested quantities of the plurality of VT processing requests is less than or equal to the quantity of idle destination resources, the ESV may receive all the VT processing requests. Optionally, if the ESV determines that the sum of requested quantities of the plurality of VT processing requests is greater than the quantity of idle destination resources, the ESV may arbitrate the plurality of VT processing requests, choose to receive some VT processing requests from the plurality of VT processing requests, and reject remaining VT processing requests.

Further, the ESV may converge VTs from different RQs, so that the VTs of the different RQs can be processed by the SVU at a same moment. In this way, in this application, the plurality of different VTs may be integrated, so that the vector component simultaneously processes the plurality of different VTs, to improve resource utilization of the vector component and resolve a short vector problem that may exist in the conventional technology.

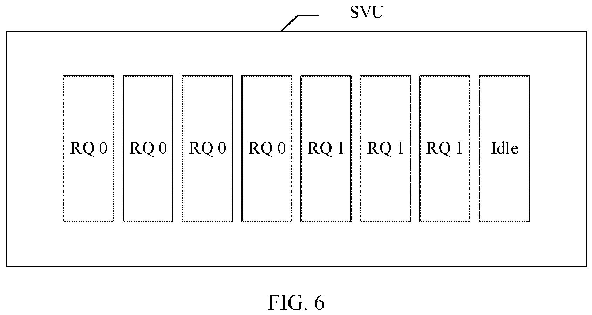

For example, FIG. 6 is another schematic of usage status information of a vector component according to an embodiment of this application. It is assumed that a maximum quantity of computable lanes in an SVU is 8. An RQ 0 applies for four lanes in the SVU to execute a to-be-processed VT, and an RQ 1 applies for three lanes in the SVU to execute a to-be-processed VT. An ESV may determine, based on a VT processing request of the RQ 0, a VT processing request of the RQ 1, and the usage status information of the SVU, that the SVU can simultaneously process the VT processing request of the RQ 0 and the VT processing request of the RQ 1. Then, the ESV may allocate idle lanes in the SVU, to simultaneously process a VT of the RQ 0 and a VT of the RQ 1 respectively. To be specific, the ESV uses four idle lanes in the SVU to process the VT of the RQ 0, uses other three idle lanes to process the VT of the RQ 1, and finally uses a remaining idle lane to receive a VT processing request of another RQ.

Further, in embodiments of this application, from a perspective of the SVU, the vector component may further flexibly split the VT based on a VT being executed and usage status information of a destination resource in the SVU, so that optimization at a finer granularity can be implemented.

For example, when the SVU processes the VT, the VT may be executed in several execution cycles based on content of the VT, in other words, there may be a scenario in which processing of one VT needs to be performed using a plurality of execution cycles. In a process of processing the VT, a quantity of idle lanes of the SVU in each execution cycle may be detected. If the quantity of idle lanes is greater than a quantity of lanes applied for by the VT of which processing is not completed, remaining unprocessed content of the VT of which processing is not completed may be split. In this way, processing of the remaining unprocessed content of the VT of which processing is not completed can be implemented over the lane applied for by the VT and the idle lane at the same time. In this way, execution time of the VT of which processing is not completed can be shortened, and resource utilization of the vector component can be improved.

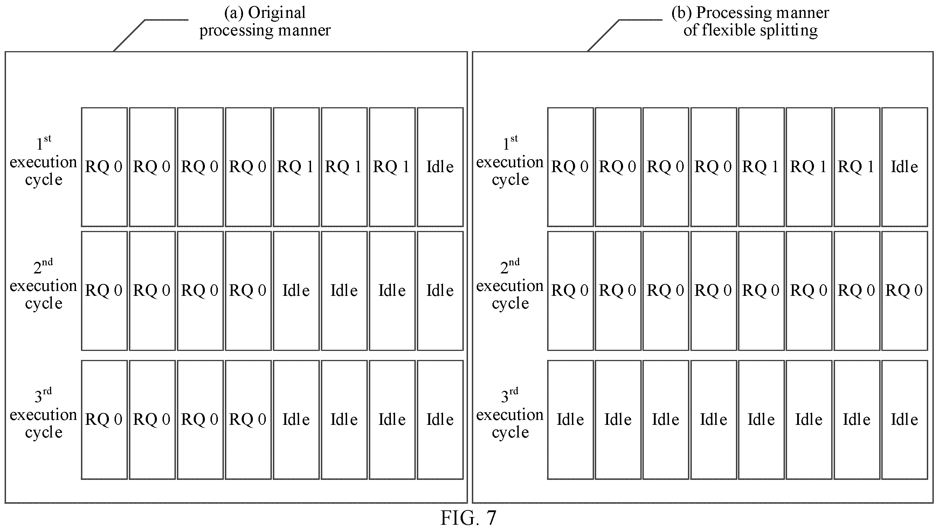

For example, FIG. 7 is another schematic of usage status information of a vector component according to an embodiment of this application. It is assumed that a maximum quantity of computable lanes in an SVU is 8. As shown in (a) in FIG. 7, if a processing manner of flexibly splitting a VT is not used, an RQ 0 applies for four lanes in the SVU to execute a to-be-processed VT, and three execution cycles in the vector component need to be occupied to complete processing. An RQ 1 also applies for four lanes in the SVU to execute a to-be-processed VT, and one execution cycle in the vector component need to be occupied to complete processing. In this case, in a 2^{nd} execution cycle and a 3^{rd} execution cycle, utilization of the vector component is only 50%, causing a waste of resources. As shown in (b) in FIG. 7, if a processing manner of flexibly splitting a VT is used, in a scenario in which it is detected that an idle destination resource exists in the 2^{nd} execution cycle, and a quantity of idle lanes can implement processing on a VT corresponding to the RQ 0, VTs that correspond to the RQ 0 and that need to be executed in the 2^{nd} execution cycle and the 3^{rd} execution cycle may be split, so that processing of the VT of the RQ 0 can be completed in the 2^{nd} execution cycle. It should be understood that, in this processing manner, a VT processing request of another RQ may be further received from the 3^{rd} execution cycle. In this way, a short vector problem can be fairly resolved, to improve the utilization of the vector component and reduce the waste of resources.

The following describes in detail embodiments of this application with reference to the accompanying drawings.

It should be noted that, in embodiments of this application, "a plurality of" means two or more. "And/or" describes an association relationship between associated objects, and represents that three relationships may exist. For example, A and/or B may represent the following three cases: Only A exists, both A and B exist, and only B exists. In addition, in descriptions of this application, terms such as "first" and "second" are merely used for distinction and description, and should not be understood as an indication or implication of relative importance, or as an indication or implication of an order.

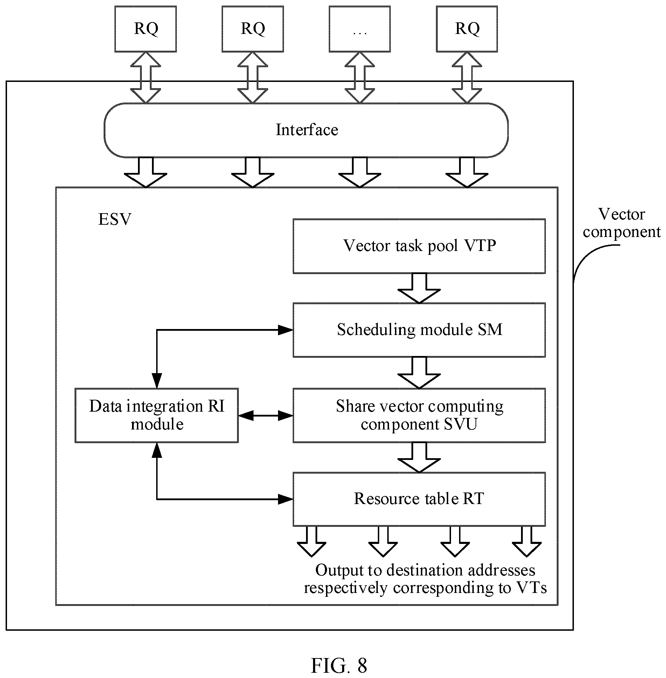

FIG. 8 is a schematic of a structure of a vector computing-based processing apparatus according to an embodiment of this application. The apparatus may be deployed in a processor for resource sharing, for example, a vector component. Optionally, the apparatus may be an ESV, or an apparatus including an ESV The ESV may include a vector task pool (vector task pool, VTP), a scheduling module (scheduling module, SM), a resource table (resource table, RT), an SVU, and a data integration (result integration, RI) module. It should be understood that the structure shown in FIG. 8 is divided based on logical functions, and there may be another division manner in actual implementation. In addition, in actual implementation, more functional units and the like may be further included. This is not limited in this application. The VTP may be mainly configured to buffer a VT sent from each RQ, and may be further configured to interact with each RQ, for example, respond to a VT processing request initiated by the RQ (a response indicating an application success or an application failure).

The SM may be configured to obtain usage status information of the SVU and the VT buffered in the VTP. Then, the SM may select a VT from the VTP based on the usage status information of the SVU, to obtain a VT set, and send the VT set to the SVU for execution. The VT set includes a plurality of to-be-processed VTs. In other words, the SM may implement matching between the VT processing request and the usage status information of the SVU, and implement execution scheduling of the VT processing request, so that utilization of the vector component can be improved, to avoid a short vector problem.

The RT may be used to collect statistics on usage status information of a resource in the ESV The resource may be a computing resource, a storage resource, a bandwidth resource, or the like. In addition, the RT may further provide the RQ with a query request (which may also be referred to as a "resource query request") for the usage status information of the SVU, an interface for applying for the resource, an interface for releasing the resource, or the like. For example, the RT may provide the RQ with a query request of the following information, but not limited to the following information: an idle destination resource in the ESV, usage status information of the VT, an occupation status of a destination resource, a priority of the VT, and the like.

The SVU may mainly include several execution units, and is responsible for executing the VT set. For example, a basic execution unit in the SVU is a lane. Different lanes may perform different execution operations. Data of the different lanes may come from a same VT. For example, data of four lanes in the left figure of FIG. 6 comes from a VT applied for by an RQ 0. Alternatively, data of the different lanes may come from different VTs. For example, data of three lanes in FIG. 6 comes from a VT applied for by an RQ 1, and a source of the data of the three lanes is different from that of data of four lanes in the left figure. In this way, the different lanes from the different VTs can be executed simultaneously in the SVU.

The RI may be responsible for integrating processing results obtained through processing of the SVU. In addition, the RI may split the processing results based on a destination receiver address indicated in the VT, and send a split processing result to the destination receiver address indicated by the VT. For example, the destination receiver address may indicate a corresponding RQ, or may indicate a corresponding specified address, or the like. For example, if the processing result includes a first processing sub-result of the VT applied for by the RQ 0 and a second processing sub-result of the VT applied for by the RQ 1, the RI sends the first processing sub-result to a destination receiver address indicated by the RQ 0, and sends the second processing sub-result to a destination receiver address indicated by the RQ 1.

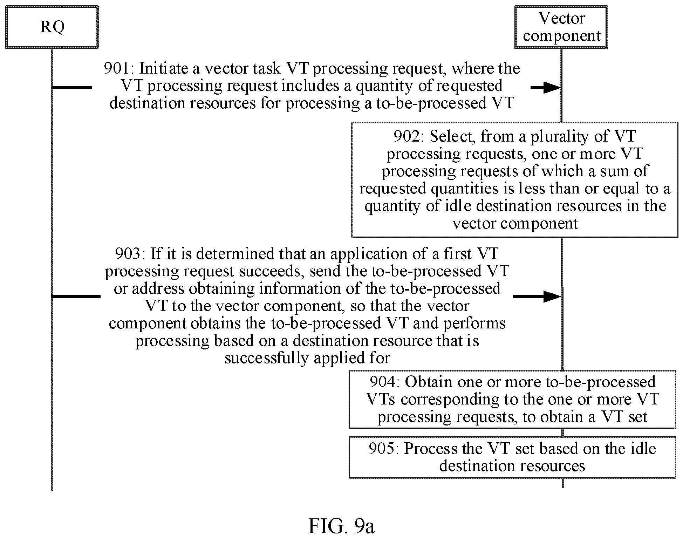

FIG. 9a is a schematic flowchart of a vector computing-based processing method according to an embodiment of this application. There may be one or more RQs in FIG. 9a. In this embodiment, any one of the one or more RQs is used as an example for description. It should be understood that in actual implementation, there may be a plurality of RQs, for example, a scenario shown in FIG. 4 or FIG. 8. A vector component in FIG. 9a may be the ESV described in the foregoing embodiment. For a structure of the vector component and a function that can be implemented by each functional unit, refer to the foregoing content described in FIG. 8.

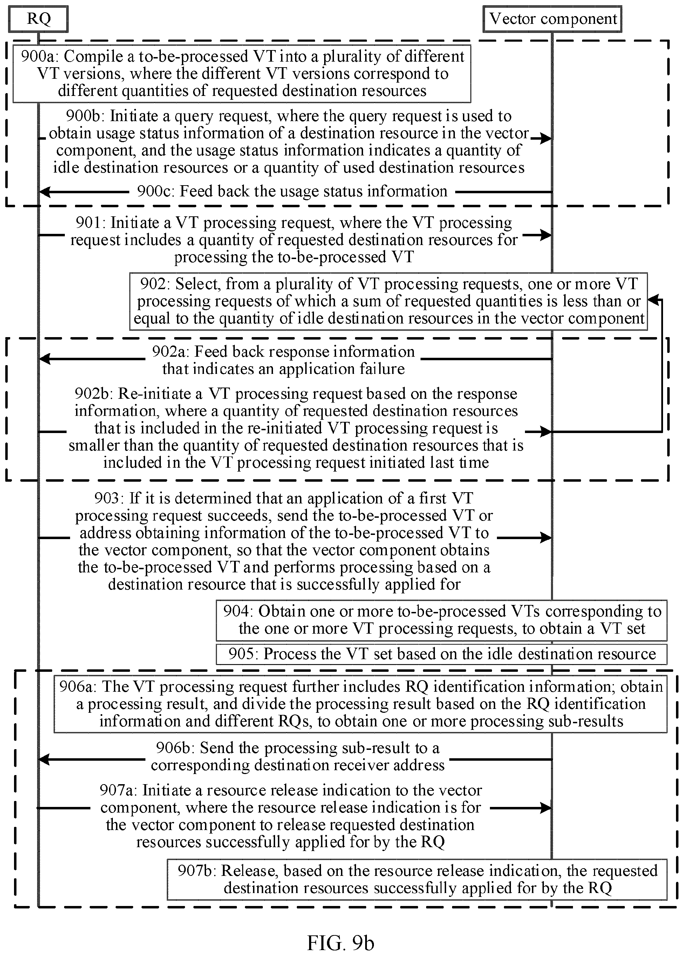

In an optional embodiment, to improve a possibility that the RQ successfully applies for a resource in the vector component, the RQ may further perform processing in the following steps 900a to 900c before step 900a. FIG. 9b is another schematic flowchart of a vector computing-based processing method according to an embodiment of this application.

Step 900a: An RQ compiles a to-be-processed VT into a plurality of different VT versions, where the different VT versions correspond to different quantities of requested destination resources.

For example, it is assumed that the RQ learns that a maximum quantity of computable vector lanes of a vector component is 32 bits, the RQ may compile a program corresponding to the to-be-processed VT into VT versions such as 128 bits (correspondingly, four lanes of destination resources are needed), 256 bits (correspondingly, eight lanes of destination resources are needed), or 512 bits (correspondingly, 16 lanes of destination resources are needed). In this way, the RQ may select, based on a quantity of idle destination resources in the vector component, a corresponding destination VT version to initiate a VT processing request. Alternatively, the RQ may sequentially apply, starting from a VT version corresponding to a maximum requested quantity, to the vector component for the destination resource until the application succeeds. Therefore, in this example, a success rate of applying for the destination resource by the RQ can be improved, thereby improving computing efficiency.

In addition, for another example, the VT version compiled by the RQ may further include a VT version whose requested quantity is 0. In other words, the VT version compiled by the RQ may also include a VT version that can be executed by the RQ internally. In this way, in a scenario in which the RQ fails to apply for the destination resource, the RQ may alternatively implement processing on the to-be-processed VT.

Optionally, during implementation of this application, the to-be-processed VT may alternatively be divided into a plurality of computing blocks (blocks) in advance, and each block may include several instruction sets. Then, each block is used as a to-be-processed VT, to apply to the vector component for a destination resource. It may be understood that a smaller data amount of the to-be-processed VT indicates a higher success rate of applying for the destination resource, and the computing efficiency can be further improved. It should be noted that requested quantities correspondingly successfully applied for by to-be-processed VTs of different blocks may also be different.

Step 900b: The RQ initiates a query request to the vector component, where the query request is used to obtain usage status information of a destination resource in the vector component, and the usage status information indicates the quantity of idle destination resources or a quantity of used destination resources.

Step 900c: The vector component feeds back the usage status information.

For example, the usage status information that is received by the RQ and that is fed back by the vector component may indicate: the quantity of idle destination resources is 8 lanes, or the quantity of used destination resources is 24/32 (where the maximum quantity of computable vector lanes of the vector component is 32, and a quantity of used lanes is 24). Therefore, in this example, the RQ may initiate the VT processing request to the vector component based on the usage status information of the vector component, so that the success rate of applying for the destination resource by the RQ can be improved, thereby improving the computing efficiency. For example, the RQ may apply, based on that the quantity of idle destination resources in the vector component is 8 lanes, for a destination resource less than or equal to 8 lanes.

It should be noted that steps 900b and 900c are optional examples, and may be selectively performed based on an actual situation. For example, if a frequency or a quantity of times that the vector component (or within a specified time period) receives the VT processing request initiated by the RQ is low or small, generally, an application success probability of initiating the VT processing request by the RQ is high, and the RQ may directly initiate the VT processing request without initiating the query request to the vector component in advance. Similarly, if the application success probability of initiating the VT processing request by the RQ is low, the RQ may obtain the usage status information of the vector component by performing steps 900b and 900c, to improve a success possibility of applying for a resource. For example, the RQ may record an application result of initiating the VT processing request each time, and determine, by analyzing the application result, whether the query request needs to be initiated. For example, the RQ determines, through analyzing, that an application success rate in a time period in the morning is high. In this case, the RQ directly initiates the VT processing request in this time period, and first initiates the query request in another time period.

Step 901: The RQ initiates the VT processing request to the vector component, where the VT processing request includes a quantity of requested destination resources for processing the to-be-processed VT. Optionally, the RQ may directly initiate the processing request to the VT. Optionally, the RQ may alternatively sequentially use, starting from a VT version corresponding to a maximum requested quantity, at least one VT version whose requested quantity is less than or equal to the quantity of idle destination resources as a destination VT version based on the quantity of idle destination resources in the vector component and from the at least one VT version. In this way, the RQ can apply for more destination resources as much as possible, to improve VT processing efficiency.

For example, with reference to the examples shown in step 900a and step 900c, the RQ may determine, based on the usage status information, that the quantity of idle destination resources in the vector component is 8 lanes, in other words, may determine that a VT version that can be processed by the vector component includes 128 bits (correspondingly, four lanes of destination resources are needed) or 256 bits (correspondingly, eight lanes of destination resources are needed). It should be understood that more destination resources that are applied for indicates higher efficiency of vector computing. Therefore, the RQ may first apply to the vector component for requested eight lanes of destination resources, and if the application fails, further apply to the vector component for requested four lanes of destination resources. Alternatively, if the RQ fails to apply for eight lanes of destination resources, the RQ may directly determine to process the to-be-processed VT internally, and does not choose to apply for four lanes of destination resources. A specific implementation may be determined according to a preset policy of the RQ. For example, when content of the to-be-processed VT is little, if a large quantity of destination resources are not successfully applied for, processing may be directly performed internally, and time is no longer spent applying for a smaller quantity of destination resources.

For another example, if the RQ does not send the query request to the vector component before initiating the VT processing request, the RQ may directly initiate, starting from the VT version corresponding to the maximum requested quantity, the VT processing request to the vector component from the plurality of VT versions obtained through compiling, for example, 16 lanes of destination resources in step 900a.

In addition, in another optional implementation, the RQ may alternatively perform, after determining the quantity of idle destination resources based on the usage status information obtained in step 900c, compilation on the VT version based on the quantity of idle destination resources. Optionally, the RQ may not perform compilation on the VT version in step 900a in advance, and generate a corresponding VT version based on the determined quantity of idle destination resources. For example, it is assumed that the quantity of idle destination resources is 8 lanes, the quantity of requested destination resources requested by the RQ to the vector component is 8 lanes. Alternatively, if it is determined that the quantity of idle destination resources is 10 lanes, the RQ determines that, in VT versions less than or equal to 10 lanes in VT versions obtained through compiling, the VT version corresponding to the maximum requested quantity is a VT version corresponding to eight lanes. To improve utilization of the destination resource, the RQ may obtain, through compiling, the VT version corresponding to 10 lanes, in other words, the quantity of requested destination resources requested to the vector component is 10 lanes.

Step 902: The vector component selects, from the plurality of VT processing requests, one or more VT processing requests of which a sum of requested quantities is less than or equal to the quantity of idle destination resources in the vector component.

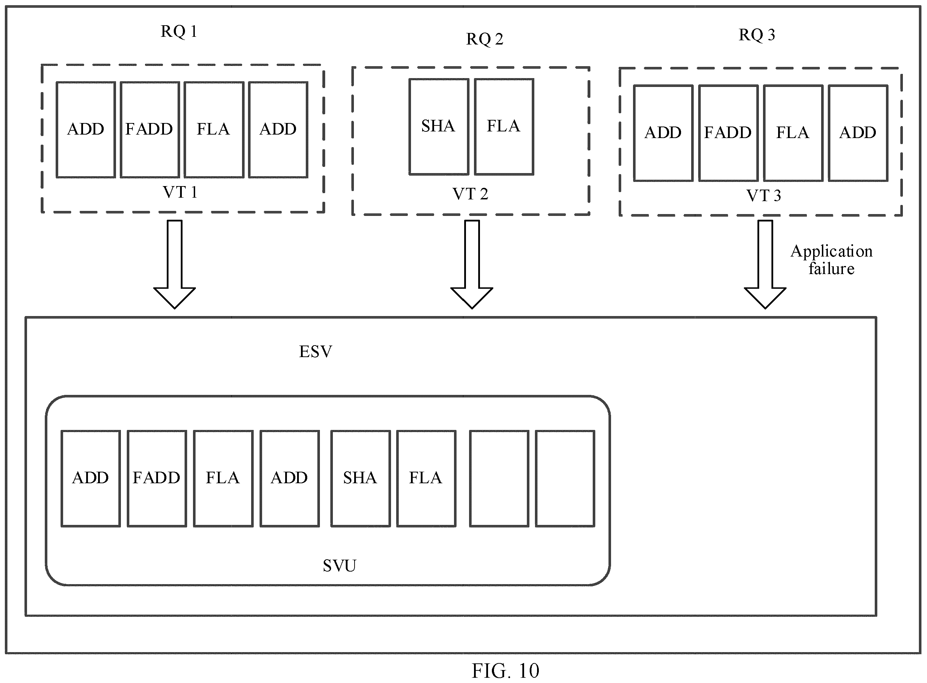

FIG. 10 is a schematic of a scenario of a vector computing-based processing method according to an embodiment of this application. It is assumed that a vector component receives a VT 1 processing request initiated by an RQ 1 and a VT 2 processing request initiated by an RQ 2. Based on a destination resource whose requested quantity is 8 lanes, the RQ 1 requests 4 lanes, and the RQ 2 requests 2 lanes, because a sum of requested quantities of the RQ 1 and the RQ 2 is 6 lanes, which is less than a quantity of idle destination resources, that is, 8 lanes, the VT 1 and the VT 2 may be integrated, therefore, an SVU in an ESV may perform processing. As shown in FIG. 10, a program instruction set included in the VT 1 includes ADD instructions, FLA instructions, and FADD instructions, and a program instruction set included in the VT 2 includes FLA instructions and SHA instructions.

Optionally, if a VT processing request initiated by an RQ is not included in the one or more to-be-processed VTs selected by the vector component in step 905, in other words, a resource application fails this time (for example, if the vector component has selected the RQ 1 and the RQ 2, and an RQ 3 in FIG. 10 cannot be selected, a resource application of the RQ 3 fails this time), the following steps 902a and 902b may continue to be performed. If the VT processing request initiated by the RQ is included, in other words, a resource application succeeds this time (for example, the RQ 1 and the RQ 2 in FIG. 10), step 903 may continue to be performed.

Step 902a: The RQ receives response information that is fed back by the vector component and that indicates an application failure. For example, in the scenario shown in FIG. 10, it is assumed that a VT 3 processing request initiated by the RQ 3 exists at the same time, and the RQ 3 requests 4 lanes. The vector component determines, based on a quantity of idle destination resources, that is, 2 lanes, that the vector component currently cannot support simultaneous processing of the VT 3, and feeds back the response information of the application failure to the RQ 3.

Step 902b: The RQ re-initiates a VT processing request based on the response information, where a quantity of requested destination resources that is included in the re-initiated VT processing request is less than the quantity of requested destination resources that is included in the VT processing request initiated last time. For example, the RQ 3 in FIG. 10 changes the requested quantity from 4 lanes to 2 lanes, and initiates the VT processing request again. In this way, the vector component may receive the VT processing request re-initiated by the RQ 3. In addition, the process returns to step 905 for processing, to judge whether the VT processing request re-initiated by the RQ can be applied for successfully.

It should be noted that step 902b is an optional embodiment, and may be selectively performed based on an actual situation. For example, if the RQ receives the response information indicating the application failure, the RQ may not re-initiate the VT processing request, the RQ internally processes the to-be-processed VT, and does not apply to the vector component for a destination resource whose requested quantity is 2 lanes. A specific implementation may be determined according to a preset policy of the RQ. For example, when content of the to-be-processed VT is little, if a large quantity of destination resources are not successfully applied for, processing may be directly performed internally, and time is no longer spent applying for a smaller quantity of destination resources.

Step 903: If it is determined that an application of the first VT processing request succeeds, send the to-be-processed VT or address obtaining information of the to-be-processed VT to the vector component, so that the vector component obtains the to-be-processed VT and performs processing based on a destination resource that is successfully applied for. In this way, after the RQ successfully performing application, the to-be-processed VT that needs to be processed by the vector component is sent to the vector component, to avoid a waste of transmission resources between the RQ and the vector component.

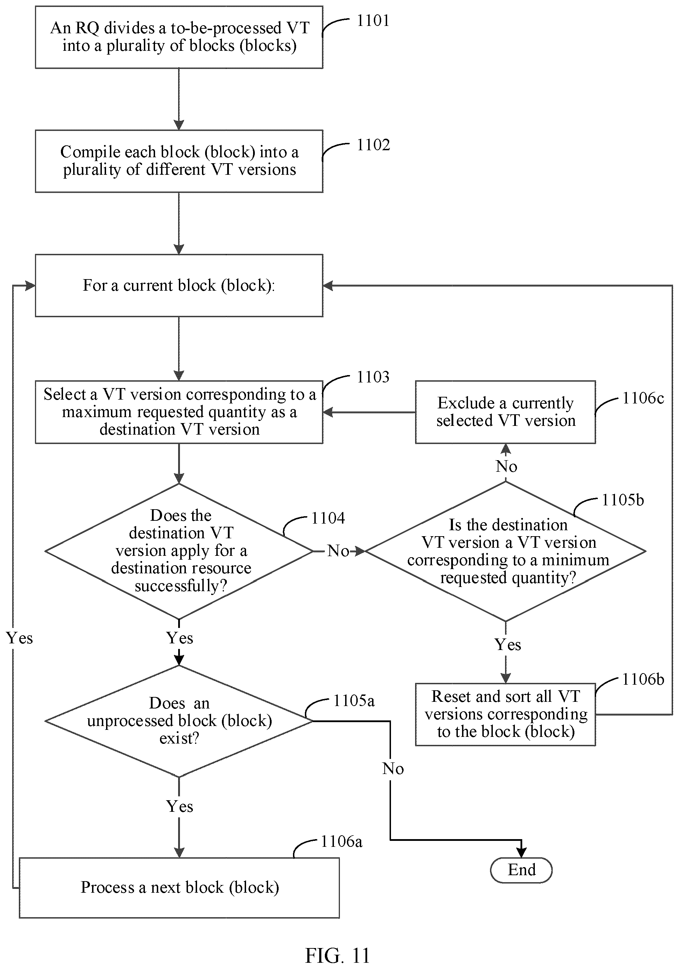

For ease of understanding, FIG. 11 is a flowchart of initiating a VT processing request according to an embodiment of this application.

Step 1101: An RQ divides a to-be-processed VT into a plurality of blocks. For example, the RQ may divide program content of a to-be-processed VT into 11 blocks, each block includes a set of some program instructions in the to-be-processed VT, and a program instruction set included in the 11 blocks is the program content of the to-be-processed VT.

Step 1102: The RQ compiles each block into a plurality of different VT versions. For example, the RQ may process each block, in other words, after the to-be-processed VT is divided into the different blocks, the blocks do not affect each other. For example, a block 1 may be compiled into VT versions: 128 bits (correspondingly, 4 lanes of destination resources are needed) and 256 bits (correspondingly, 8 lanes of destination resources are needed). A block 2 includes a large program instruction set, and may be compiled into VT versions: 128 bits (correspondingly, 4 lanes of destination resources are needed), 256 bits (correspondingly, 8 lanes of destination resources are needed), and 512 bits (correspondingly, 16 lanes of destination resources are needed).

Then, the RQ may sequentially process the blocks. For a current block (for example, the block 2), the following steps are performed.

Step 1103: Select a VT version corresponding to a maximum requested quantity as a destination VT version. For example, the RQ may select, from a plurality of compiled VT versions, the VT version corresponding to the maximum requested quantity as the destination VT version. For example, for the block 2, a VT version whose requested quantity is 16 lanes is selected as the destination VT version. Alternatively, the RQ may send a query request to the vector component. After receiving usage status information fed back by the vector component, and determining a quantity of idle destination resources in the vector component based on the usage status information, the RQ selects, from at least one VT version whose requested quantity is less than or equal to the quantity of idle destination resources, the VT version corresponding to the maximum requested quantity as the destination VT version. For example, for the block 2, if the RQ determines that a current quantity of idle destination resources in the vector component is 8 lanes, the VT version corresponding to the 8 lanes is selected as the target VT version from requested quantities of 4 lanes and 8 lanes. In this way, more destination resources can be requested as much as possible, to improve VT processing efficiency.

Step 1104: Determine whether the destination VT version applies for a destination resource successfully. Optionally, if the application succeeds, step 1105a continues to be performed, or if the application fails, step 1105b is performed.

Step 1105a: Determine whether an unprocessed block exists. If the unprocessed block exists, step 1106a continues to be performed, or if the unprocessed block does not exist, the program ends. Step 1106a: Process a next block. For example, it is assumed that the current block is the block 1, and the next block is the block 2. In this case, the block 2 is used as the current block, and step 1103 is repeatedly performed.

Step 1105b: Determine whether the destination VT version is a VT version corresponding to a minimum requested quantity. If the destination VT version is the VT version, it indicates that there is no VT version with a smaller requested quantity, in other words, none of VT versions is successfully applied for in an execution cycle. In this case, the RQ may continue to perform step 1106b. If the destination VT version is not the VT version, it indicates that there is still a VT version with a smaller requested quantity. In this case, the RQ may continue to perform step 1106c. Step 1106b: Reset and sort all VT versions corresponding to the block. For example, if the RQ unsuccessfully apply for VT processing requests of all the VT versions, because the vector component is in a busy state in this execution cycle, the RQ may re-sort the plurality of compiled VT versions, and re-initiate a VT processing request after specific time elapses. Alternatively, the RQ may internally process the block. It should be noted that a processing manner of the block does not affect a processing manner of another block, and the another block may also apply, starting from step 1103, to the vector component for a destination resource.

Step 1106c: Exclude a currently selected VT version. For example, if the RQ does not successfully apply for a VT processing request based on a large requested quantity, it indicates that there is a small or no quantity of idle destination resources in the vector component at this time, and the RQ may select a VT version corresponding to a smaller requested quantity as the destination VT version to re-initiate the VT processing request. For example, in the scenario shown in FIG. 10, when the RQ 3 initiates the VT 3 processing request based on a requested quantity, that is, 4 lanes, as the destination VT version, and receives, from the vector component, the response information indicating the application failure, the RQ 3 may re-initiate a VT 3 processing request based on a requested quantity, that is, 2 lanes, as the destination VT version. In this case, because the vector component has 2 lanes of idle resources, the processing request may be successfully applied for. After the vector component receives the to-be-processed VT or the address obtaining information of the to-be-processed VT sent by the RQ, the following step 904 may continue to be performed. Step 904: The vector component obtains one or more to-be-processed VTs corresponding to the one or more VT processing requests, to obtain a VT set.

Step 905: The vector component processes the VT set based on the idle destination resources.

In an optional embodiment, a VT processing request initiated by an RQ may further include a priority of a VT. If there is an RQ that successfully applies for a first VT processing request, in a process of processing a to-be-processed VT of the RQ, a vector component may further receive a second VT processing request initiated by the RQ, where a priority of a VT in the second VT processing request is higher than a priority of a VT in the first VT processing request. In this case, the vector component may process, by using requested destination resources correspondingly applied for by the first VT processing request, a to-be-processed VT corresponding to the second VT processing request. With reference to the example in FIG. 10, the RQ 1 successfully applies for resources of a lane 0 to a lane 3, and is used to execute the VT 1. In this case, the vector component receives another VT processing request of the RQ 1, and is used to execute a VT 1', and a priority of the VT 1' is higher than that of the VT 1, and the vector component may preferentially process the VT 1'. It may be understood that the RQ may process, by interacting with the vector component, a VT with a higher priority by using a resource that has been successfully applied for, so that a plurality of processing requirements of the RQ for the VT can be met.

In the foregoing embodiment, before initiating the second VT processing request, the RQ may further initiate a migration indication. After receiving the migration indication sent by the RQ, the vector component may migrate, to a storage unit, a remaining unprocessed VT in the to-be-processed VT corresponding to the RQ. The storage unit may be, for example, a memory. In this way, the RQ interacts with the vector component for the migration indication, to avoid a processing exception caused by a loss of a processing progress of a VT being processed. It may be understood that, in another scenario in which the remaining unprocessed VT needs to be migrated, the RQ may also initiate a migration indication to notify the vector component of storing the remaining unprocessed VT.

In another optional embodiment, to further improve utilization of a destination resource in a vector component, in this embodiment of this application, the vector component may monitor usage status information of a resource in real time or periodically, to obtain a quantity of idle resources. Then, the vector component may further flexibly split, based on the idle resource, a VT being executed. For example, the vector component may usually perform data processing on a VT set based on an execution cycle, where different to-be-processed VTs correspond to different quantities of execution cycles; in each execution cycle, if a quantity of idle destination resources is greater than or equal to a requested quantity corresponding to a first VT, split a remaining unprocessed VT of the first VT; and perform data processing on the split first VT by using the requested destination resources applied for by the first VT and the idle destination resource.

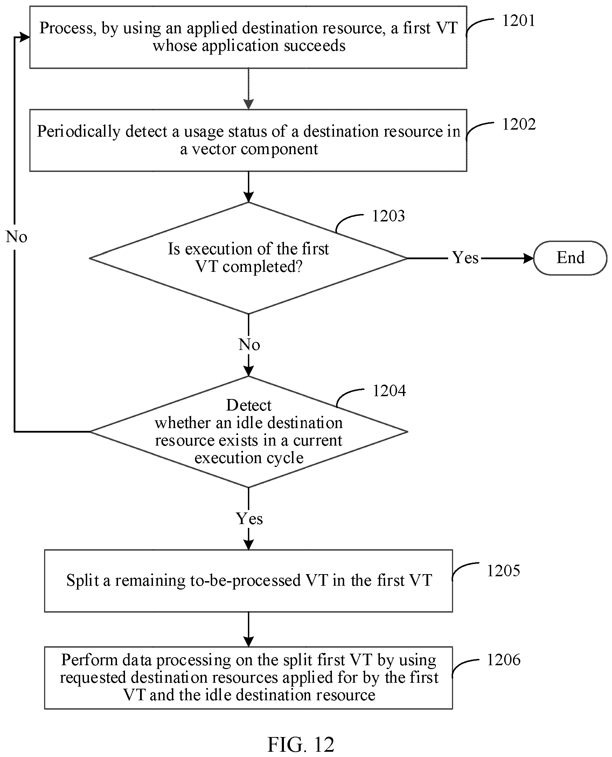

FIG. 12 is a schematic flowchart of splitting a to-be-processed VT according to an embodiment of this application.

Step 1201: A vector component processes, by using an applied destination resource, a first VT whose application succeeds. For example, with reference to the example shown in FIG. 10, an RQ 1 applies for four lanes of destination resources, and the vector component may allocate destination resources of a lane 0 to a lane 3, to process a VT 1 applied for by the RQ 1, or the RQ 1 may directly apply for destination resources of a lane 0 to a lane 3. Then, the vector component processes the VT 1 by using the destination resources of the lane 0 to the lane 3. Similarly, the vector component processes a VT 2 by using destination resources of a lane 4 and a lane 5.

Step 1202: The vector component periodically detects usage status information of a destination resource in the vector component. Optionally, detecting a usage status of the destination resource may be detecting a quantity of idle destination resources.

Step 1203: The vector component determines whether execution of the first VT is completed. If the execution is completed, the program ends. If the execution is not completed, step 1204 is performed. For example, execution of the first VT can be completed in three execution cycles. If it is detected, after a 1^{st} execution cycle ends, whether the execution of the first VT is completed, a result indicating that the execution of the first VT is not completed is obtained.

Step 1204: The vector component detects whether an idle destination resource exists in a current execution cycle. For example, the first VT is the VT 1 in FIG. 10, the execution needs to be completed in three execution cycles, and execution of the VT 2 in FIG. 10 needs to be completed in one execution cycle. In a 2^{nd} execution cycle, it is assumed that there is no another VT processing request, the vector component may detect that four lanes of destination resources exist in the current execution cycle, and step 1205 is performed.

Step 1205: The vector component splits a remaining unprocessed VT in the first VT. For example, the vector component splits content of to-be-processed VTs in the 2^{nd} execution cycle and a 3^{rd} execution cycle, to obtain two parts of content of to-be-processed VTs.

Step 1206: The vector component performs data processing on the split first VT by using requested destination resources applied for by the first VT and the idle destination resource. For example, the vector component may continue to process, by using the destination resources of the lane 0 to the lane 3, the content of the to-be-processed VT that originally needs to be processed in the 2^{nd} execution cycle, and may process, by using destination resources of a lane 4 to a lane 7, the content of the to-be-processed VT that originally needs to be processed in the 3^{rd} execution cycle. In this way, in the 2^{nd} execution cycle, execution of a VT 1 processing request applied for by the RQ 1 can be completed, so that VT processing efficiency of the vector component can be improved. In addition, in the 3^{rd} execution cycle, a VT processing request initiated by another RQ may be further received, for example, a VT 4 processing request that is initiated by an RQ 4 and whose requested quantity is 8 lanes is received, so that utilization of the vector component can be improved.

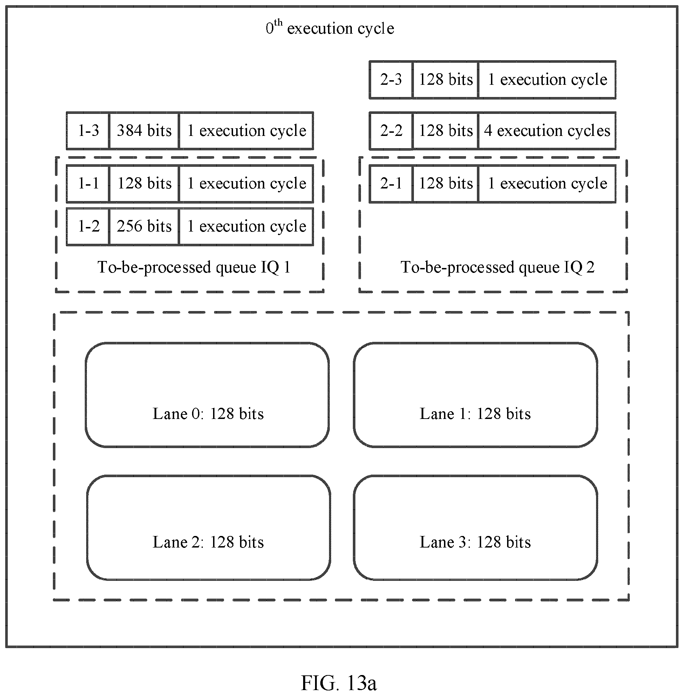

For ease of understanding, the following describes, by using diagrams of scenarios shown in FIG. 13a to FIG. 13d, flexible splitting manners provided in embodiments of this application, which are shown as follows.

First, the scenarios shown in FIG. 13a to FIG. 13d are briefly described. It is assumed that there are two RQs, that is, an RQ 1 and an RQ 2. A vector component has a destination resource of four lanes (lanes), that is, a lane 0 to a lane 3, and each lane corresponds to 128 bits (bits). An issue queue (issue queue, IQ) is used to temporarily store a to-be-processed VT in a next execution cycle. In this scenario, it is assumed that the RQ 1 corresponds to an IQ 1, and the RQ 2 corresponds to an IQ 2. It should be noted that RQs are not necessarily in one to one correspondence with IQs, or a plurality of RQs may correspond to one IQ.

As shown in FIG. 13a, in a 0^{th} execution cycle (which may also be understood as a start moment), the to-be-processed VT that is successfully correspondingly applied for by the RQ 1 includes: 1-1 of a destination resource of 1 lane and 1 execution cycle, and 1-2 of a destination resource of 2 lanes and 1 execution cycle, where 1-1 and 1-2 are temporarily stored in the IQ 1. The to-be-processed VT that is successfully correspondingly applied for by the RQ 2 includes: 2-1 of a destination resource of 1 lane and 1 execution cycle, where 2-1 is temporarily stored in the IQ 2. In addition, the to-be-processed VT that is correspondingly initiated by the RQ 1 includes: 1-3 of a destination resource of 3 lanes and 1 execution cycle. The to-be-processed VT initiated by the RQ 2 includes: 2-2 of a destination resource of 1 lane and 4 execution cycles, and 2-3 of a destination resource of 1 lane and 1 execution cycle.

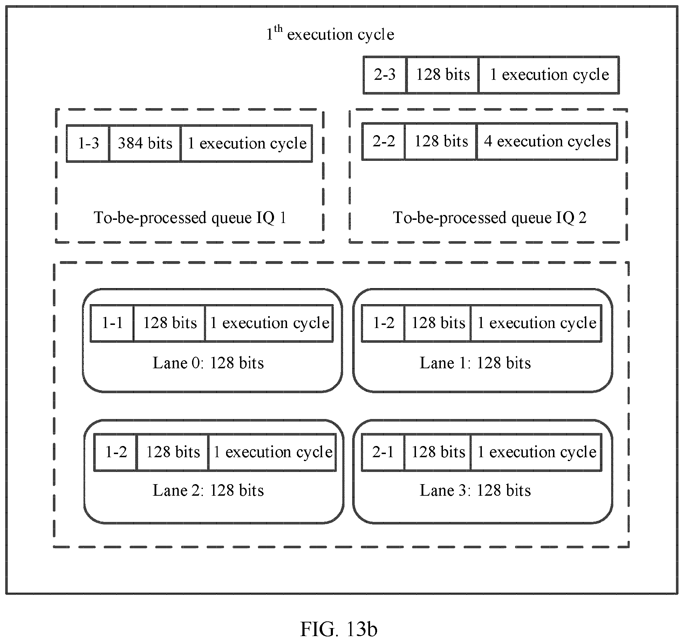

As shown in FIG. 13b, in the 1^{st} execution cycle, to-be-processed VTs located in the IQ 1 and the IQ 2 in the 0^{th} execution cycle are processed by the vector component. In this case, the vector component may select both 1-3 and 2-2 for integration in a next execution cycle. Content of a to-be-processed VT of one execution cycle of 1-3 is temporarily stored in the IQ 1, and content of a to-be-processed VT of one execution cycle of 2-2 is temporarily stored in the IQ 2.

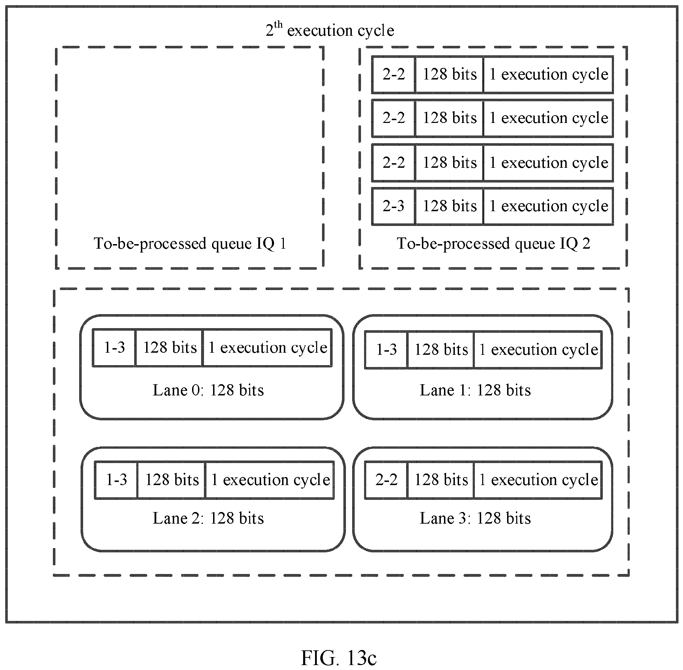

As shown in FIG. 13c, in the 2^{nd} execution cycle, to-be-processed VTs located in the IQ 1 and the IQ 2 in the 1^{st} execution cycle are processed by the vector component. In this case, if the flexible splitting manner is not used, the vector component may select both content of a to-be-processed VT of the 2^{nd} execution cycle of 2-2 and 2-3 for integration in a next execution cycle, and there are still two remaining execution cycles of 2-2. During implementation of this application, the vector component may perform detection based on a processing task in an IQ, and determine that there is 2 lanes of idle resources in the next execution cycle. In this case, 2-2 may be split into three subtasks that each need one execution cycle. In this way, the IQ 2 may include the three subtasks of 2-2 and 2-3.

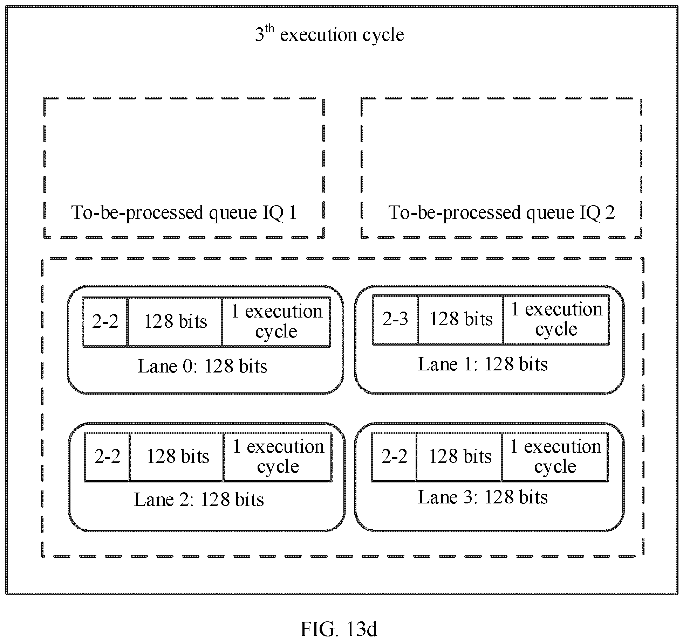

As shown in FIG. 13d, in the 3^{rd} execution cycle, to-be-processed VTs located in the IQ 1 and the IQ 2 in the 2^{nd} execution cycle are processed by the vector component. In this way, in the flexible splitting manner provided in this embodiment of this application, processing on 1-1, 1-2, 1-3, 2-1, 2-2, and 2-3 can be completed in the 3^{rd} execution cycle. In comparison with an implementation scenario in which the flexible splitting manner is not used, processing efficiency of 2-2 can be improved, processing time can be reduced, and resource utilization of the vector component can be improved. In addition, processing of a VT task with a larger requested quantity may be further implemented in a fourth execution cycle and a fifth execution cycle, for example, processing of a VT of 512 bits may be implemented, thereby improving a success rate of applying for the destination resource.

Step 906a: The VT processing request may further include RQ identification information. In this case, the vector component may obtain a processing result based on the processing in step 905, and then divide the processing result based on different RQs, to obtain one or more processing sub-results. For example, in the example shown in FIG. 10, after the vector component obtains processing results including the VT 1 and the VT 2, the processing result is divided, to obtain a processing sub-result corresponding to the VT 1 and a processing sub-result corresponding to the VT 2. It should be understood that the vector component may further converge processing sub-results obtained by each to-be-processed VT in different execution cycles, to obtain a processing result corresponding to each to-be-processed VT. For example, in the examples shown in FIG. 13c and FIG. 13d, the vector component may further converge processing sub-results obtained by performing processing by the lane 3 on 2-2 in the 2^{nd} execution cycle and processing sub-results obtained by performing processing by the lane 0, the lane 2, and the lane 3 on 2-2 in the 3^{rd} execution cycle, to obtain a complete processing result of 2-2.

Step 906b: The vector component sends the processing sub-result to a corresponding destination receiver address. For example, the vector component may feed back the processing sub-result corresponding to the VT 1 to the RQ 1 or an address indicated by the RQ 1, and feed back the processing sub-result corresponding to the VT 2 to the RQ 2 or an address indicated by the RQ 2. After the RQ determines that the vector component completes execution of the to-be-processed VT, the RQ may release, by performing the following steps 907a and 907b, a resource that has been applied for by the RQ.

Step 907a: The RQ initiates a resource release indication to the vector component, where the resource release indication is for the vector component to release requested destination resources successfully applied for by the RQ.

Step 907b: The vector component releases, based on the resource release indication, the requested destination resources successfully applied for by the RQ.

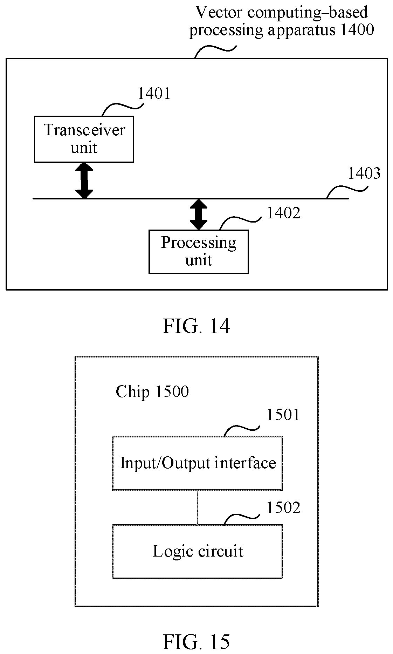

A same technical concept as the foregoing vector computing-based processing method, embodiments of this application further provide another vector computing-based processing apparatus 1400. As shown in FIG. 14, the apparatus may be disposed on a terminal device. The apparatus 1400 for feeding back channel state information includes a transceiver unit 1401 and a processing unit 1402. The apparatus 1400 may be configured to implement the method that can be implemented by the vector component described in the foregoing method embodiment. Optionally, the transceiver unit 1401 and the processing unit 1402 may be connected to each other over a communication line 1403. The communication line 1403 may be a peripheral component interconnect (peripheral component interconnect, PCI for short) standard bus, an extended industry standard architecture (extended industry standard architecture, EISA for short) bus, or the like. The communication line 1403 may be classified into an address bus, a data bus, a control bus, and the like. For ease of representation, only one bold line is used to represent the bus in FIG. 14, but this does not mean that there is only one bus or only one type of bus.

The transceiver unit 1401 is configured to receive vector task VT processing requests respectively initiated by a plurality of requesters RQs. The VT processing request includes a quantity of requested destination resources for processing a to-be-processed VT. The processing unit 1402 is configured to select, from the plurality of VT processing requests, one or more VT processing requests of which a sum of requested quantities is less than or equal to a quantity of idle destination resources in the vector component. The processing unit 1402 is further configured to obtain one or more to-be-processed VT corresponding to the one or more VT processing requests, to obtain a VT set. The processing unit 1402 is further configured to process the VT set based on the idle destination resources.

In a possible design, before receiving the VT processing requests respectively initiated by the plurality of RQs, the transceiver unit 1401 is further configured to: receive a query request initiated by a first RQ, where the query request is used to obtain usage status information of the destination resource, and the usage status information indicates the quantity of idle destination resources or a quantity of used destination resources; and feed back the usage status information to the first RQ. In a possible design, the processing unit 1402 is configured to process the VT set based on the idle destination resources, and is specifically configured to: process the VT set based on an execution cycle, where different to-be-processed VTs included in the VT set correspond to a same quantity or different quantities of execution cycles, and the quantity of execution cycles is determined by the to-be-processed VT; in each execution cycle, if the quantity of idle destination resources is greater than or equal to a requested quantity corresponding to a first to-be-processed VT, split a remaining unprocessed VT from the first to-be-processed VT, where the first to-be-processed VT represents any to-be-processed VT on which processing is not completed in the VT set; and process the split first to-be-processed VT by using the requested destination resources applied for by the first to-be-processed VT and the idle destination resource in the vector component.

In a possible design, the VT processing request further includes RQ identification information. After processing the VT set, the processing unit 1402 is further configured to: generate a processing result; and divide the processing result based on the RQ identification information and different RQs, to obtain one or more processing sub-results.

In a possible design, the transceiver unit 1401 is further configured to: if an application of a VT processing request of the first RQ fails, feed back, to the first RQ, response information that indicates an application failure.

In a possible design, the transceiver unit 1401 is further configured to receive a VT processing request re-initiated by the first RQ. A quantity of requested destination resources that is included in the re-initiated VT processing request is less than the quantity of requested destination resources that is included in the VT processing request initiated last time.

In a possible design, the VT processing request further includes the following information: a priority of a VT. The transceiver unit 1401 is further configured to: if an application of a first VT processing request of the first RQ succeeds, receive a second VT processing request initiated by the first RQ, where a priority of a VT in the second VT processing request is higher than a priority of a VT in the first VT processing request. The processing unit 1402 is further configured to process, by using requested destination resources correspondingly applied for by the first VT processing request, a to-be-processed VT corresponding to the second VT processing request.

In a possible design, the transceiver unit 1401 is further configured to receive a migration indication initiated by the first RQ. The processing unit 1402 is further configured to migrate, to a storage unit based on the migration indication, a remaining unprocessed VT in a to-be-processed VT corresponding to the first RQ.

In a possible design, the transceiver unit 1401 is further configured to receive a resource release indication initiated by the first RQ. The processing unit 1402 is further configured to release, based on the resource release indication, the requested destination resources successfully applied for by the first RQ.

In another optional implementation, the apparatus 1400 may be further configured to implement the method that can be implemented by the RQ described in the foregoing method embodiment. The transceiver unit 1401 is configured to initiate a first VT processing request to the vector component. The first VT processing request includes a quantity of requested destination resources for processing a to-be-processed VT. The processing unit 1402 is configured to: if it is determined that an application of the first VT processing request succeeds, send the to-be-processed VT or address obtaining information of the to-be-processed VT to the vector component, so that the vector component obtains the to-be-processed VT and performs processing based on the destination resource that is successfully applied for.

In a possible design, before initiating the first VT processing request to the vector component, the transceiver unit 1401 is further configured to: initiate a query request to the vector component, where the query request is used to obtain usage status information of the destination resource, and the usage status information indicates a quantity of idle destination resources or a quantity of used destination resources; and receive the usage status information fed back by the vector component. The processing unit is further configured to: determine, based on the usage status information, the quantity of idle destination resources in the vector component, and determine a requested quantity less than or equal to the quantity of idle destination resources; or if it is determined that the quantity of idle destination resources is less than a preset threshold, initiate the query request again after preset duration elapses, or process, by the RQ, the to-be-processed VT.

In a possible design, the processing unit 1402 is further configured to compile the to-be-processed VT into a plurality of different VT versions. Different VT versions correspond to different quantities of requested destination resources.

In a possible design, the transceiver unit 1401 is configured to initiate the first VT processing request to the vector component, and is specifically configured to: initiate the first VT processing request by sequentially using, starting from a VT version corresponding to a maximum requested quantity, at least one VT version as whose requested quantity is less than or equal to the quantity of idle destination resources a destination VT version based on the quantity of idle destination resources and from the at least one VT version, until it is determined that the application of the first VT processing request succeeds.

In a possible design, the transceiver unit 1401 is configured to initiate the first VT processing request to the vector component, and is specifically configured to: receive response information that is fed back by the vector component and that indicates an application failure; and re-initiate a first VT processing request based on the response information, where a requested quantity included in the re-initiated first VT processing request is less than the requested quantity included in the first VT processing request initiated last time.

In a possible design, the first VT processing request further includes the following information: a priority of a VT. The transceiver unit 1401 is further configured to: if it is determined that the application of the first VT processing request succeeds, initiate a second VT processing request to the vector component, where a priority of a VT in the second VT processing request is higher than a priority of a VT in the first VT processing request.

In a possible design, the transceiver unit 1401 is further configured to initiate a migration indication to the vector component. The migration indication is for the vector component to migrate, to a storage unit, a remaining unprocessed VT in the to-be-processed VT corresponding to the RQ.

In a possible design, the transceiver unit 1401 is further configured to initiate a resource release indication to the vector component. The resource release indication is for the vector component to release the requested destination resources successfully applied for by the RQ.

It should be noted that module division in embodiments of this application is an example, and is merely logical function division. In actual implementation, there may be another division manner. For example, a plurality of units or components may be combined or integrated into another system, or some features may be ignored or not performed. In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the related technology, or all or a part of the technical solutions may be implemented in a form of a software product. The computer software product is stored in a storage medium and includes several instructions for enabling a computer device (which may be a personal computer, a server, a network device, or the like) or a processor (processor) to perform all or a part of the steps of the methods in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

It may be understood that the memory in embodiments of this application may be a volatile memory or a nonvolatile memory, or may include a volatile memory and a nonvolatile memory. The nonvolatile memory may be a ROM (ROM), a programmable ROM (programmable ROM, PROM), an erasable PROM (erasable PROM, EPROM), an electrically EPROM (electrically EPROM, EEPROM), or a flash memory. The volatile memory may be a random access memory (RAM), used as an external cache. Through example but not limitative description, many forms of RAMs may be used, for example, a static RAM (static RAM, SRAM), a dynamic RAM (dynamic RAM, DRAM), a synchronous DRAM (synchronous DRAM, SDRAM), a double data rate SDRAM (double data rate SDRAM, DDR SDRAM), an enhanced SDRAM (enhanced SDRAM, ESDRAM), a synchlink DRAM (synchlink DRAM, SLDRAM), and a direct rambus RAM (direct rambus RAM, DR RAM). It should be noted that the memory of the systems and methods described in this specification includes but is not limited to these and any memory of another proper type.

An embodiment of this application further provides a computer-readable storage medium. The computer-readable storage medium stores a computer program. When the computer program is executed by a computer, the channel state information feedback method according to any one of the foregoing method embodiments is implemented.

An embodiment of this application further provides a computer program product. When the computer program product is executed by a computer, the channel state information feedback method according to any one of the foregoing method embodiments is implemented.

All or some of the foregoing embodiments may be implemented by using software, hardware, firmware, or any combination thereof. When the software is used for implementation, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive (solid-state drive, SSD)), or the like.

As shown in FIG. 15, an embodiment of this application further provides a chip 1500, including an input/output interface 1501 and a logic circuit 1502. The input/output interface 1501 is configured to receive/output code instructions or information, and the logic circuit 1502 is configured to execute the code instructions or process the information, to perform the channel state information feedback method according to any one of the foregoing method embodiments.

The chip 1500 may implement functions shown by the processing unit and/or the transceiver unit in the foregoing embodiments.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by using the hardware or the software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed apparatus and method may be implemented in other manners.

## Claims

1. A vector computing-based processing method, applied to a vector component, and comprising:
receiving vector task VT processing requests respectively initiated by a plurality of requesters RQs, wherein the VT processing request comprises a quantity of requested destination resources for processing a to-be-processed VT;
selecting, from the plurality of VT processing requests, one or more VT processing requests of which a sum of requested quantities is less than or equal to a quantity of idle destination resources in the vector component;
obtaining one or more to-be-processed VTs corresponding to the one or more VT processing requests, to obtain a VT set; and
processing the VT set based on the idle destination resources.

2. The method according to claim 1, wherein before the receiving VT processing requests respectively initiated by a plurality of RQs, the method further comprises:
receiving a query request initiated by a first RQ, wherein the query request is used to obtain usage status information of the destination resource, and the usage status information indicates the quantity of idle destination resources or a quantity of used destination resources; and
feeding back the usage status information to the first RQ.

3. The method according to claim 1 or 2, wherein the processing the VT set based on the idle destination resources comprises:
processing the VT set based on an execution cycle, wherein different to-be-processed VTs comprised in the VT set correspond to a same quantity or different quantities of execution cycles, and the quantity of execution cycles is determined by the to-be-processed VT;
in each execution cycle, if the quantity of idle destination resources is greater than or equal to a requested quantity corresponding to a first to-be-processed VT, splitting a remaining unprocessed VT in the first to-be-processed VT, wherein the first to-be-processed VT represents any to-be-processed VT that is in the VT set and on which processing is not completed; and
processing the split first to-be-processed VT by using the requested destination resources applied for by the first to-be-processed VT and the idle destination resource in the vector component.

4. The method according to any one of claims 1 to 3, wherein the VT processing request further comprises RQ identification information, and after the processing the VT set, the method further comprises:
generating a processing result; and
dividing the processing result based on the RQ identification information and different RQs, to obtain one or more processing sub-results.

5. The method according to any one of claims 1 to 4, wherein the method further comprises:
if an application of a VT processing request of the first RQ fails, feeding back, to the first RQ, response information that indicates an application failure.

6. The method according to claim 5, wherein the method further comprises:
receiving a VT processing request re-initiated by the first RQ, wherein a quantity of requested destination resources that is comprised in the re-initiated VT processing request is less than the quantity of requested destination resources that is comprised in the VT processing request initiated last time.

7. The method according to any one of claims 1 to 6, wherein the VT processing request further comprises the following information: a priority of a VT; and
the method further comprises:
if an application of a first VT processing request of the first RQ succeeds, receiving a second VT processing request initiated by the first RQ, wherein a priority of a VT in the second VT processing request is higher than a priority of a VT in the first VT processing request; and
processing, by using requested destination resources correspondingly applied for by the first VT processing request, a to-be-processed VT corresponding to the second VT processing request.

8. The method according to any one of claims 1 to 7, wherein the method further comprises:
receiving a migration indication initiated by the first RQ; and
migrating, to a storage unit based on the migration indication, a remaining unprocessed VT in a to-be-processed VT corresponding to the first RQ.

9. The method according to any one of claims 1 to 8, wherein the method further comprises:
receiving a resource release indication initiated by the first RQ; and
releasing, based on the resource release indication, the requested destination resources successfully applied for by the first RQ.

10. A vector computing-based processing method, applied to an RQ, and comprising:
initiating a first VT processing request to a vector component, wherein the first VT processing request comprises a quantity of requested destination resources for processing a to-be-processed VT; and
if it is determined that an application of the first VT processing request succeeds, sending the to-be-processed VT or address obtaining information of the to-be-processed VT to the vector component, so that the vector component obtains the to-be-processed VT and performs processing based on the destination resource that is successfully applied for.

11. The method according to claim 10, wherein before the initiating a first VT processing request to a vector component, the method further comprises:
initiating a query request to the vector component, wherein the query request is used to obtain usage status information of the destination resource, and the usage status information indicates a quantity of idle destination resources or a quantity of used destination resources;
receiving the usage status information fed back by the vector component; and
determining, based on the usage status information, the quantity of idle destination resources in the vector component, and determining a requested quantity less than or equal to the quantity of idle destination resources; or
if it is determined that the quantity of idle destination resources is less than a preset threshold, initiating the query request again after preset duration elapses, or processing, by the RQ, the to-be-processed VT.

12. The method according to claim 10 or 11, wherein the method further comprises:
compiling the to-be-processed VT into a plurality of different VT versions, wherein the different VT versions correspond to different quantities of requested destination resources.

13. The method according to claim 12, wherein the initiating a first VT processing request to a vector component comprises:
initiating the first VT processing request by sequentially using, starting from a VT version corresponding to a maximum requested quantity, at least one VT version whose requested quantity is less than or equal to the quantity of idle destination resources as a destination VT version based on the quantity of idle destination resources and from the at least one VT version, until it is determined that the application of the first VT processing request succeeds.

14. The method according to any one of claims 10 to 13, wherein the initiating a first VT processing request to a vector component comprises:
receiving response information that is fed back by the vector component and that indicates an application failure; and
re-initiating a first VT processing request based on the response information, wherein a requested quantity comprised in the re-initiated first VT processing request is less than the requested quantity comprised in the first VT processing request initiated last time.

15. The method according to any one of claims 10 to 14, wherein the first VT processing request further comprises the following information: a priority of a VT; and
the method further comprises:
if it is determined that the application of the first VT processing request succeeds, initiating a second VT processing request to the vector component, wherein a priority of a VT in the second VT processing request is higher than a priority of a VT in the first VT processing request.

16. The method according to any one of claims 10 to 15, wherein the method further comprises:
initiating a migration indication to the vector component, wherein the migration indication is for the vector component to migrate, to a storage unit, a remaining unprocessed VT in the to-be-processed VT corresponding to the RQ.

17. The method according to any one of claims 10 to 16, wherein the method further comprises:
initiating a resource release indication to the vector component, wherein the resource release indication is for the vector component to release the requested destination resources successfully applied for by the RQ.

18. A vector computing-based processing apparatus, comprising a transceiver unit and a processing unit, wherein
the transceiver unit is configured to receive vector task VT processing requests respectively initiated by a plurality of requesters RQs, wherein the VT processing request comprises a quantity of requested destination resources for processing a to-be-processed VT;
the processing unit is configured to select, from the plurality of VT processing requests, one or more VT processing requests of which a sum of requested quantities is less than or equal to a quantity of idle destination resources in a vector component;
the processing unit is further configured to obtain one or more to-be-processed VTs corresponding to the one or more VT processing requests, to obtain a VT set; and
the processing unit is further configured to process the VT set based on the idle destination resources.

19. The apparatus according to claim 18, wherein before receiving the VT processing requests respectively initiated by the plurality of RQs, the transceiver unit is further configured to:
receive a query request initiated by a first RQ, wherein the query request is used to obtain usage status information of the destination resource, and the usage status information indicates the quantity of idle destination resources or a quantity of used destination resources; and
feed back the usage status information to the first RQ.

20. The apparatus according to claim 18 or 19, wherein the processing unit is configured to process the VT set based on the idle destination resources, and is specifically configured to:
process the VT set based on an execution cycle, wherein different to-be-processed VTs comprised in the VT set correspond to a same quantity or different quantities of execution cycles, and the quantity of execution cycles is determined by the to-be-processed VT;
in each execution cycle, if the quantity of idle destination resources is greater than or equal to a requested quantity corresponding to a first to-be-processed VT, split a remaining unprocessed VT in the first to-be-processed VT, wherein the first to-be-processed VT represents any to-be-processed VT that is in the VT set and on which processing is not completed; and
process the split first to-be-processed VT by using the requested destination resources applied for by the first to-be-processed VT and the idle destination resource in the vector component.

21. The apparatus according to any one of claims 18 to 20, wherein the VT processing request further comprises RQ identification information, and after the VT set is processed, the processing unit is further configured to:
generate a processing result; and
divide the processing result based on the RQ identification information and different RQs, to obtain one or more processing sub-results.

22. The apparatus according to any one of claims 18 to 21, wherein the transceiver unit is further configured to:
if an application of a VT processing request of the first RQ fails, feed back, to the first RQ, response information that indicates an application failure.

23. The apparatus according to claim 22, wherein the transceiver unit is further configured to:
receive a VT processing request re-initiated by the first RQ, wherein a quantity of requested destination resources that is comprised in the re-initiated VT processing request is less than the quantity of requested destination resources that is comprised in the VT processing request initiated last time.

24. The apparatus according to any one of claims 18 to 23, wherein the VT processing request further comprises the following information: a priority of a VT;
the transceiver unit is further configured to: if an application of a first VT processing request of the first RQ succeeds, receive a second VT processing request initiated by the first RQ, wherein a priority of a VT in the second VT processing request is higher than a priority of a VT in the first VT processing request; and
the processing unit is further configured to process, by using requested destination resources correspondingly applied for by the first VT processing request, a to-be-processed VT corresponding to the second VT processing request.

25. The apparatus according to any one of claims 18 to 24, wherein
the transceiver unit is further configured to receive a migration indication initiated by the first RQ; and
the processing unit is further configured to migrate, to a storage unit based on the migration indication, a remaining unprocessed VT in a to-be-processed VT corresponding to the first RQ.

26. The apparatus according to any one of claims 18 to 25, wherein
the transceiver unit is further configured to receive a resource release indication initiated by the first RQ; and
the processing unit is further configured to release, based on the resource release indication, the requested destination resources successfully applied for by the first RQ.

27. A vector computing-based processing apparatus, comprising a transceiver unit and a processing unit, wherein
the transceiver unit is configured to initiate a first VT processing request to a vector component, wherein the first VT processing request comprises a quantity of requested destination resources for processing a to-be-processed VT; and
the processing unit is configured to: if it is determined that an application of the first VT processing request succeeds, send the to-be-processed VT or address obtaining information of the to-be-processed VT to the vector component, so that the vector component obtains the to-be-processed VT and performs processing based on the destination resource that is successfully applied for.

28. The apparatus according to claim 27, wherein before initiating the first VT processing request to the vector component, the transceiver unit is further configured to:
initiate a query request to the vector component, wherein the query request is used to obtain usage status information of the destination resource, and the usage status information indicates a quantity of idle destination resources or a quantity of used destination resources;
receive the usage status information fed back by the vector component; and
the processing unit is further configured to:
determine, based on the usage status information, the quantity of idle destination resources in the vector component, and determine a requested quantity less than or equal to the quantity of idle destination resources; or
if it is determined that the quantity of idle destination resources is less than a preset threshold, initiate the query request again after preset duration elapses, or process, by the RQ, the to-be-processed VT.

29. The apparatus according to claim 27 or 28, wherein the processing unit is further configured to compile the to-be-processed VT into a plurality of different VT versions, wherein the different VT versions correspond to different quantities of requested destination resources.

30. The apparatus according to claim 29, wherein the transceiver unit is configured to initiate the first VT processing request to the vector component, and is specifically configured to:
initiate the first VT processing request by sequentially using, starting from a VT version corresponding to a maximum requested quantity, at least one VT version whose requested quantity is less than or equal to the quantity of idle destination resources as a destination VT version based on the quantity of idle destination resources and from the at least one VT version, until it is determined that the application of the first VT processing request succeeds.

31. The apparatus according to any one of claims 27 to 30, wherein the transceiver unit is configured to initiate the first VT processing request to the vector component, and is specifically configured to:
receive response information that is fed back by the vector component and that indicates an application failure; and
re-initiate a first VT processing request based on the response information, wherein a requested quantity comprised in the re-initiated first VT processing request is less than the requested quantity comprised in the first VT processing request initiated last time.

32. The apparatus according to any one of claims 27 to 31, wherein the first VT processing request further comprises the following information: a priority of a VT; and
the transceiver unit is further configured to:
if it is determined that the application of the first VT processing request succeeds, initiate a second VT processing request to the vector component, wherein a priority of a VT in the second VT processing request is higher than a priority of a VT in the first VT processing request.

33. The apparatus according to any one of claims 27 to 32, wherein the transceiver unit is further configured to:
initiate a migration indication to the vector component, wherein the migration indication is for the vector component to migrate, to a storage unit, a remaining unprocessed VT in the to-be-processed VT corresponding to the RQ.

34. The apparatus according to any one of claims 27 to 33, wherein the transceiver unit is further configured to:
initiate a resource release indication to the vector component, wherein the resource release indication is for the vector component to release the requested destination resources successfully applied for by the RQ.

35. A computer program product, wherein when the computer program product runs on a computer or a processor, the computer or the processor is enabled to perform the method according to any one of claims 1 to 9, or perform the method according to any one of claims 10 to 17.

36. A computer-readable storage medium, wherein the computer-readable storage medium stores computer instructions; and when the computer instructions are run on a computer or a processor, the computer or the processor is enabled to perform the method according to any one of claims 1 to 9, or perform the method according to any one of claims 10 to 17.
